(19) Europäisches Patentamt
European Patent Office
Office européen des brevets

(11) **EP 3 736 739 B1**

(12) **EUROPEAN PATENT SPECIFICATION**

(45) Date of publication and mention
of the grant of the patent:
**25.12.2024 Bulletin 2024/52**

(21) Application number: **19173837.6**

(22) Date of filing: **10.05.2019**

(51) International Patent Classification (IPC):
**G06N 3/08** *(2023.01)*     **G06N 3/091** *(2023.01)*
**G06N 3/092** *(2023.01)*     **G06N 3/047** *(2023.01)*

(52) Cooperative Patent Classification (CPC):
**G06N 3/08; G06N 3/047; G06N 3/091; G06N 3/092**

(54) **METHOD AND DEVICE FOR OPERATING A LEARNING SYSTEM**

VERFAHREN UND VORRICHTUNG ZUM BETRIEB EINES LERNSYSTEMS

PROCÉDÉ ET DISPOSITIF POUR FAIRE FONCTIONNER UN SYSTÈME D'APPRENTISSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.11.2020 Bulletin 2020/46**

(73) Proprietor: **Robert Bosch GmbH**
**70442 Stuttgart (DE)**

(72) Inventors:
• **Kandemir, Melih**
**70439 Stuttgart (DE)**
• **Haussmann, Manuel**
**69115 Heidelberg (DE)**

(56) References cited:
• **DI FENG ET AL: "Deep Active Learning for Efficient Training of a LiDAR 3D Object Detector", ARXIV.ORG, CORNELL UNIVERSITY LIBRARY, 201 OLIN LIBRARY CORNELL UNIVERSITY ITHACA, NY 14853, 30 January 2019 (2019-01-30), XP081269777**

• **MENG FANG ET AL: "Learning how to Active Learn: A Deep Reinforcement Learning Approach", ARXIV.ORG, CORNELL UNIVERSITY LIBRARY, 201 OLIN LIBRARY CORNELL UNIVERSITY ITHACA, NY 14853, 8 August 2017 (2017-08-08), XP080951923**

• **LONG CHENGJIANG ET AL: "Multi-class Multi-annotator Active Learning with Robust Gaussian Process for Visual Recognition", 2015 IEEE INTERNATIONAL CONFERENCE ON COMPUTER VISION (ICCV), IEEE, 7 December 2015 (2015-12-07), pages 2839 - 2847, XP032866630, DOI: 10.1109/ICCV.2015.325**

• **ERVIN TENG ET AL: "Learning to Learn in Simulation", ARXIV.ORG, CORNELL UNIVERSITY LIBRARY, 201 OLIN LIBRARY CORNELL UNIVERSITY ITHACA, NY 14853, 5 February 2019 (2019-02-05), XP081025414**

**Description**

Background

The invention relates to a method and a system for operating a learning system, in particular a learning system for training an artificial neural network.

In supervised learning artificial neural networks for video and/or image processing are trained using training data comprising labelled images. Creating sets of labelled images for training is cumbersome and expensive. It is thus desirable to identify and label images that are particular useful for the training.

In one aspect acquisition functions are used to identify images from sets of images. Acquisition functions are deterministic functions that select images based for example on entropy or mutual information defined in terms of information about an image content such as color or the like.

The usefulness of an individual acquisition function for a particular set of images depends on the data of the images. In order to use a particularly useful acquisition function, for example, S. Ebert, M. Fritz, B. Schiele "RALF: A Reinforced Active Learning Formulation for Object Class Recognistion", CVPR, 2012 IEEE Conference on Computer Vision and Pattern Recognition pages 3626-3633 discloses a method that learns a policy to choose an acquisition function from a set of predetermined and deterministic acquisition functions based on a set of available heuristics. Furthermore, DI FENG ET AL: "Deep Active Learning for Efficient Training of a LiDAR 3D Object Detector",ARXIV.ORG, CORNELL UNIVERSITY LIBRARY, 201 OLIN LIBRARY CORNELL UNIVERSITY ITHACA, NY 14853, 30 January 2019 (2019-01-30), discloses an active learning method to train a LiDAR 3D object detector with the least amount of labeled training data necessary.

Disclosure of the invention

The invention is set out in independent claims 1, 6, 7 and 8. Preferred aspects of the invention are set out in the dependent claims 2-5.

In the drawings

Fig. 1    depicts a schematic view of parts of a learning system,
Fig. 2    depicts steps in a method for operating the learning system,
Fig. 3    depicts parts of the learning system and a device comprising the learning system.

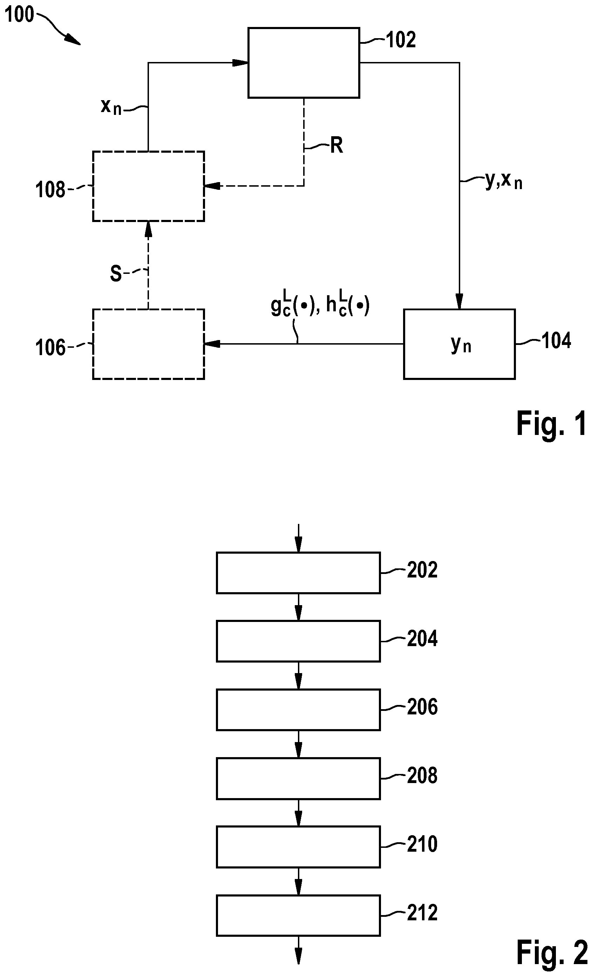

Figure 1 schematically depicts parts of an exemplary learning system 100.

With the data-driven method described below an acquisition function is determined. As prediction uncertainty is an essential input to acquisition heuristics, in the example a deep Bayesian Neural Net is used as base predictor.

In order to acquire high-quality estimates of prediction uncertainty with an acceptable computational cost, a deterministic approximation scheme is described that can both effectively train a deep Bayesian Neural Net and calculate its posterior predictive density following a chain of closed-form operations. With this, the probabilistic information, i.e. the uncertainty provided by the predictions of the deep Bayesian Neural Net is used for a state design, which brings about a full-scale probability distribution. This distribution is then fed into a probabilistic policy network, e.g. another Bayesian Neural Net, which is trained by reinforcement feedback collected from every labeling round in order to inform the system about the success of its current acquisition function. This feedback fine-tunes the acquisition function, bringing about improved performance in the subsequent labeling rounds.

The training uses samples that are processed recursively with epochs that comprise batches.

An exemplary training is based on a large unlabeled set of images, e.g. 1 million images. The training starts from a small labeled subset of this set, for instance 100 images. This subset is for example chosen at random from the set, i.e. without active learning. A predictor, e.g. Bayesian neural net or gaussian process is trained based on this small subset. The subset of images is in this example removed from the set.

Afterwards active learning rounds are started. For example, 1000 images are chosen to be labeled in a labeling round based on an active learning algorithm that will decides which images will be labeled.

At each labeling round, the large unlabeled set, e.g. in the first labeling round 1 million - 100 images, is used to train the predictor that was previously trained initially on the randomly selected small subset of images, e.g. the 100 images.

In a model that uses the predictions of the predictor, each unlabeled image of the large unlabeled set is assigned an acquisition score by an acquisition scoring function and a ranked order of the images is determined by ranking the images with respect to these acquisition scores. The acquisition scoring function is referred to as acquisition function.

The top-ranking images, e.g. the top-ranking 10 images, are presented to the oracle. The oracle provides the labels for these images and adds them to the previous small set of images. More specifically the oracle is adapted to present an image to a human via a human machine interface, e.g. a display. The human machine interface is adapted to detect an input, more specifically a label, that is provided by the human, e.g. via a keyboard, when viewing the image. As the top-ranking images are most relevant, the learning system presents these to the human user for labeling. Hence the human user must not label all images but only the images that are considered most relevant.

Then the predictor is trained with the new small set, e.g. after the first labeling round with 100+10 = 110 labeled images.

As the model changes recursively, its acquisition scoring function is also changed.

This cycle is repeated for example until our labeling budget is exhausted.

For the prediction, a data set $D = \{(f(x_n, y_n)\}_{n=1}^N$ is used that consists of N tuples of feature vectors $x_n \in \mathbb{R}^m$ and labels $y_n \in \{0,1\}^C$ for a C dimensional binary output label.

Parameterizing an arbitrary neural network $f(\cdot)$ with parameters w following some prior distribution p(w), the following data generation process is used in the example

$$w \sim p(w)$$

$$y|x, w \sim \prod_c^C Ber\left(y_c | \phi(f_c(x; w))\right)$$

where $f_c$ is the c-th output channel of the neural network, where $\phi(u) = \int_{-\infty}^u (x|0,1)dx$ is the normal cumulative distribution function, and $Ber(\cdot | \cdot)$ is a Bernoulli distribution.

For a test data point x* a posterior predictive distribution is used that performs model averaging on latent variables w based on their posterior distribution for example with

$$p(y^*|x^*, D) = \int p(y^*|x^*, w)p(w|D)\, dw$$

$$p(w|D) = \frac{p(Y|X, w)p(w)}{\int p(Y|X, w)\, p(w)dw}$$

for X = {x$_1$, ..., x$_N$} and Y = {y$_1$, ..., y$_N$}.

Considering a normal mean-field approximate posterior

$$q_\theta(w) = \prod_i^V N(w_i | \mu_i, \sigma_i^2)$$

where V is a number of synaptic connections in the neural net. For a new observation x* the following approximation is available to predict the output label y*

$$p(y_c^*|x^*, D) \approx \int Ber(y_c^*|\phi(f_c(x^*, w)))q_\theta(w)\, dw$$

$$\approx \int Ber\left(y_c^*|\phi(f_c^*)\right) N\left(f_c^*|g_c^L(x^*), h_c^L(x^*)\right)df_c^*$$

$$= Ber\left(y_c^* \middle| \phi\left(\frac{g_c^L(x^*)}{\sqrt{h_c^L(x^*) + 1}}\right)\right)$$

where $N(. | \cdot, \cdot)$ is a normal distribution having two free parameters, the tuple $(\mu_i, \sigma_i^2)$ represents the variational

parameter set for weight $w_i$ of the network $f(\cdot)$ and $\theta = \{(\mu_i, \sigma_i^2)_i\}$, for $i = 1, ..., V$ is a collection of the hyperparameters of weight priors $p(w_i)$, and where the functions $g_c^L(x^*)$ and $h_c^L(x^*)$ encode a cumulative map from an input layer to the moments of the top-most layer L of an exemplary Bayesian Neural Net predictor.

The data driven label acquisition described herein can perform an adaptation during an active learning labeling round. This is achieved by a reinforcement learning framework, where in the example a policy net, i.e. a deep Bayesian Neural Net, is trained by rewards observed from the training environment.

An exemplary definition of a state, action and reward is given below for this framework.

The state for the active learning is defined in the example based on a collection of unlabeled input points $D_u$. In an initial learning before the unlabeled input points are used, a collection of labeled input points $D_l$ may be used as well. In an example the input points refer to representations $x_n$ of the set of images.

For efficient processing, a representation of the state is in the example determined by first ranking an unlabeled sample set into a ranked order of the unlabeled input points $D_u$ by an information-theoretic heuristic, e.g. a maximum entropy criterion. As such heuristics assign similar scores to samples with similar character, consecutive samples in ranking inevitably have high correlation.

In order to break trends and enhance diversity, in one aspect, from the ranked order of input points, starting from the top of the order, every k-th input point is picked up until M samples $\{x_1, ..., x_M\}$ are collected.

Feeding these samples into the Bayesian Neural Net predictor a posterior predictive density estimate is determined for each sample and the state of the unlabeled sample space is determined in the following distributional form:

$$S \sim \prod_{c=1}^{C} \prod_{m=1}^{M} N(g_c^L(x_m), h_c^L(x_m))$$

where $g_c^L(\cdot)$ is the mean and $h_c^L(\cdot)$ is the variance of the activation of an output neuron, calculated as described above for the Bayesian Neural Net predictor. The state S follows a C x M-dimensional normal distribution.

An action comprises in this example, sampling in each labeling round, a number of data points from the set of samples $\{x_{i1}, ..., x_{iM}\}$ e.g. according to probability masses assigned on them.

The reward is calculated in the example by the oracle 102 from a measure of model fit and is calculated for a new data point having a newly labeled pair (x, y) as

$$R_{improv} = \prod_c \int Ber\left(y_c \middle| \phi(f_c(x; \theta))\right) q_{new}(\theta) d\theta$$
$$- \prod_c \int Ber\left(y_c \middle| \phi(f_c(x; \theta))\right) q_{old}(\theta) d\theta$$

where $q_{old}(\cdot)$ is the variational posterior before training with the new data point (x, y) and where $q_{new}(\cdot)$ is the variational posterior after training with the new data point (x, y).

Optionally, a second component that encourages the diversity across the chosen labels throughout the whole labeling round is calculated as

$$R_{div} = \frac{\#unique\ labels\ requested}{\#number\ of\ label\ requests\ in\ this\ episode}$$

The reward in this in this option calculated depending on the sum of $R_{improv}$ and $R_{div}$.

Additionally, a policy net $\pi(\cdot)$, in the example a second Bayesian Neural Net, is parameterized by $\phi \sim p(\phi)$. The input to the policy net $\pi(\cdot)$ is the state S. The output of the policy net $\pi(\cdot)$ is a parametrization of an M-dimensional categorical distribution over possible actions. The output is for example determined for M binary probabilities for taking an action $\tilde{a}_m$ at a time point t

$$p(\tilde{a}_m^t) = \int Ber(\tilde{a}_m^t | \phi(\pi_m(S_t; \phi))) q(\phi) d\phi$$

The action is then chosen based on the categorical distribution from

$$A_t \sim Cat(a^t), where\ a_m^t = \frac{\tilde{a}_m^t}{\sum_j \tilde{a}_j^t}$$

Wherein *Cat*(·) is a Categorical distribution.

In one aspect, the episodic version of a REINFORCE algorithm according to R. J. Williams. Simple statistical gradient-following algorithms for connectionist reinforcement learning. Machine learning, 8(3-4):229-256, 1992, is adapted to train the policy net $\pi$(·).

A moving average over all the past rewards may be uses. A labeling episode in the example consists of choosing a sequence of points to be labeled e.g. with a discount factor of $\gamma = 0:95$ after which the BNN is retrained and the policy net $\pi$ (·) takes one update step. The policy $\pi_\phi$(· |$S_t$) may be parameterized by a neural network with parameters $\phi$.

The method iterates between labeling episodes, training the policy net $\pi$(·), and training the deep Bayesian Neural Net f (·). An exemplary pseudo code is given below:

```
//The training procedure
Input:
          D= {Dᵤ, Dₗ}
          labeling budget,
          state size M,
          policy π_φ,
          net f_θ,
          episode length T.


// Train an initial net
Train f_θ as described above.


While budget available do
  // Sample preparation
  Generate state distribution S₀ from Dᵤ.
  // The labeling episode
  for t ∈ 1, …, T do
          Sample Aₜ via π_φ(S_{t-1})
          Dₗ ← Dₗ ∪ {data point selected via Aₜ},
          Dᵤ ← Dᵤ\ {data point selected via Aₜ},
          Generate state distribution Sₜ from Dᵤ
  end
  // Update the agent and net
  Train f_θ on Dₗ


Compute the rewards R_div, R_improv
Compute the returns Gₜ
Update φ via gradient descent on Gₜ ∇_φ log π_φ(Aₜ|Sₜ) + KL(q(φ)||p(φ))
  end
```

Where G$_t$ refers to the cumulative reward at time step t of the episode that is processed, e.g. $G_t = \sum_{i=1}^{t} R_i$ .

Figure 1 depicts an exemplary learning system 100 and an exemplary workflow for operating this system.

The learning system 100 of the depicted example comprises as components of an oracle 102, a predictor 104, a bulk filter 106 and a guide 108. Instructions for executing a function these components provide, may be executed on one or more processors and may be stored on one or more memory. The function of the individual components is described below. Nonetheless the functions may be combined or be separated differently. Interfaces between these functions are adapted accordingly.

It is assumed that images are available for the input points from a memory or from a capturing device. For the following description, xn is an input observation, i.e. an independent variable, e.g. raw image pixel data representing an image and y or y$_n$ are related output label, e.g. numeral variables representing a class or descriptive name for the image or the like.

The guide 108 is adapted for selecting a representation x$_n$ of an image from a plurality of representations of images M. The guide 108 in the example selects a plurality of images as input points to be labeled by the oracle 102.

The oracle 102 is adapted for determining a first representation y of at least one first label for the image represented by x$_n$. In one aspect the oracle 102 receives the plurality of images as input points and provides a set of labeled data for the predictor 104 to learn on. The oracle 102 comprises the human machine interface to display the image represented by x$_n$ and determines the first representation y from input detected by the human machine interface.

The oracle 102 is equipped with an interface, for example the human machine interface, to provide images, e.g. to a human user, and receive corresponding labels of images, e.g. from said human user.

The predictor 104 in turn provides predictive uncertainties, in the example the variance $h_c^L(x_n)$ with respect to the means $g_c^L(x_n)$ to the bulk filter 106.

The predictor 104 is adapted for determining a second representation y$_n$ of at least on second label, and for determining the uncertainty of the prediction of the second representation y$_n$ based on the representation x$_n$ of the image, the first representation y and the second representation y$_n$.

The predictor 104 is for example a probabilistic predictor, in particular a Gaussian process or the deep Bayesian Neural Net described above.

The guide 108 uses an acquisition function, e.g. the deep Bayesian Neural Net described above, that learns with the probabilistic state S and reinforcement feedback, e.g. the reward R = R$_{improv}$ + R$_{div}$, from the oracle 102 how to optimally choose the next points. It is thus able to adapt itself flexibly to the data set at hand.

The guide 108 communicates to the oracle 102 which input points to label next, restarting the cycle.

The system 100 is in one aspect adapted for training the predictor 104 based on randomly selected representations of images, and afterwards training the predictor 104 based on representations of images selected based on the reward R. The predictor is trained on this set using one of the many known learning or inference methods. The randomly selected input is preferably selected small compared to the input selected based on the Reward.

The guide 108 is adapted for selecting representations of images depending on the uncertainty and on the reward R.

The oracle 102 is adapted for determining the reward R depending on the representation x$_n$ of the image and/or the second representation y$_n$.

The oracle 102 is adapted to determine the reward R depending on the model, and a comparison of a first measure of model fit and a second measure of model fit, wherein the first measure is determined depending on at least one first parameter, e.g. q$_{old}$($\theta_{old}$) of the model determined before training the model with the representation xn and depending on at least one second parameter q$_{new}$($\theta_{new}$) of the model determined after training the model with the representation x$_n$. In this aspect, the reward R is calculated from a difference between the first measure and the second measure. The difference is the reward for the improvement in model fit e.g. as described above for R$_{improv}$.

Additionally, the reward aspect for diversity in the labels of the chosen batch may be used for determining the reward R$_{div}$.

The guide 108 is adapted to select a subset of input points from the set of input points for training of the predictor 104. The set of input points refers to the plurality of representations of images in this context.

The guide 108 is in one aspect adapted to select the subset depending on a ranked order of input points and depending on the acquisition function that is learned depending on the reward R and the probabilistic state S. The acquisition function is in the example learned by reinforcement learning during the learning process.

The ranking is for example provided by the bulk filter 106. In the example a heuristic bulk filter 106 is used to determine the probabilistic state S from the uncertainty.

The bulk filter 106 in the example is adapted to apply active learning. The bulk filter 106 takes the prediction, e.g. a mean $g_c^L(\cdot)$ and its attached uncertainties, e.g. variance $h_c^L(\cdot)$ for each data point in the unlabeled set, and sorts them with respect to an acquisition score using a heuristic. The heuristic is for example mutual information or variance $h_c^L(\cdot)$.

The intuition is that all acquisition scores will agree on the large portion of the unlabeled set that is less informative.

In one aspect, starting from the top in the ranking data points are chosen to obtain a set of M chosen data points as actions until the order k*M is reached. This means the input points are ranked in the ranked order and the input points are selected depending on the acquisition function. The input points are selected in particular from the top of the ranked order by selecting every k'th input point, where k is a natural number larger than 1.

In one aspect, the means and variances of the predictions of the Bayesian Neural Net on these M data points are used to construct a multivariate normal distribution. This normal distribution is used as the probabilistic state S in this aspect. The input points for the acquisition function in this aspect correspond to the probabilistic state S.

The guide 108 uses this probabilistic state S to learn to choose one input data point to label from the provided set of M actions. As a result of the action it has chosen, the guide 108 receives the reward R from the oracle 102.

The learning system 100 as described above is adapted to process images of a set of unsupervised samples comprising unlabeled images recursively. In one aspect the learning system 100 is adapted to process beforehand without active learning a plurality of randomly selected images and labels of a set of samples comprising labeled images recursively for training of the predictor 104. This means the predictor 104 is trained depending on these images and labels.

A computer implemented method of operating a learning system is described below referencing Figure 2. Figure 2 contains steps of the method. In one aspect these steps are repeated recursively as described in the pseudo code above for training the predictor 104 and for learning an acquisition function. According to one aspect, the plurality of representations of images is recursively processed, wherein in one recursion a set of samples is selected from the plurality of representations of images, labeled, and added to a plurality of input points comprising labeled images, wherein the plurality of input points comprising labeled images is processed for training of the predictor 104 and wherein the set of samples is removed from the plurality of representations of images in particular before a next recursion is started. Not all of the steps need to be executed in each recursion and the order of the steps may vary from recursion to recursion.

After the start of the method, in a step 202 the representation $x_n$ of an image is selected from the plurality of representations of images M. In one aspect, the plurality of representations of images M correspond to input points that are ranked in the ranked order and the subset of input points is selected from the top of the ranked order in particular by selecting every k'th input point, where k is a natural number larger than 1.

Afterwards a step 204 is executed.

In step 204 the first representation y of at least one first label for the image is determined, e.g. by the oracle 102 as described above.

Afterwards a step 206 is executed.

In step 206 a second representation $y_n$ of at least on second label is determined. e.g. by the predictor 104 as output the deep Bayesian Neural Net $f(\cdot)$ as described above.

Afterwards a step 208 is executed.

In step 208 the uncertainty of the prediction of the second representation $y_n$ is determined in particular based on the representation $x_n$ of the image, the first representation y and the second representation $y_n$.

Afterwards a step 210 is executed.

In step 210 the reward R is determined depending on the representation $x_n$ of the image and/or the second representation $y_n$. The reward R is preferably determined depending on the model and the comparison of the first measure of model fit and the second measure of model fit for example as described above from $R_{improv}$ and optionally from $R_{div}$. The first measure is determined for example depending on the at least one first parameter, e.g. $q_{old}(\theta_{old})$ of the model determined before training the model with the representation xn and depending on at least one second parameter $q_{new}$ $(\theta_{new})$ of the model determined after training the model with the representation $x_n$.

Afterwards a step 212 is executed.

In step 212 another representation of another image is selected depending on the uncertainty and on the reward R.

The acquisition function is determined depending on the reward R and the probabilistic state S. The acquisition function is for example learned by the probabilistic policy predictor, in particular the deep Bayesian Neural Net $\pi(\cdot)$, depending on the probabilistic state S and based on the reward R.

The steps 202 to 212 may be recursively repeated until the labeling budget is exhausted, all batches of all episodes of input data is processed or until another criterion is met.

The learning system generally may be operated in a variety of appliances.

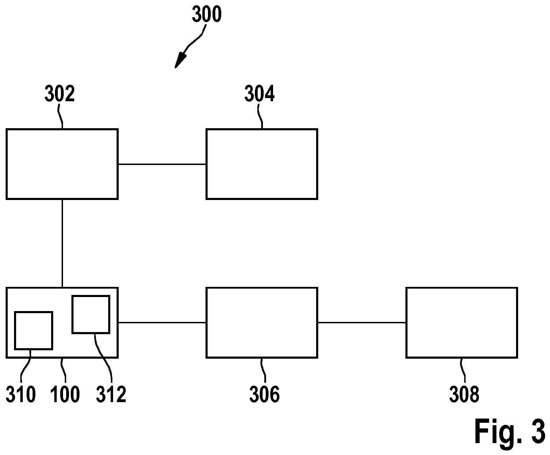

In one aspect, depicted in figure 3 the learning system 100 is part of a control system 300 adapted to determine at least one control signal for an output 302.

The control signal is in particular for a video-based or an image-based system 304. The control signal is determined as output of the learning system 100 in response to an input received at an input 306, in particular of at least one image captured for the system 100 by a sensor 308. The sensor 308 is for example an image, video, radar, LiDAR, ultrasonic, or motion sensor.

The learning system 100 in the example comprises a processor 310 and a memory 312 for storing instructions that when executed by the processor 310 cause the processor to operate the learning system according to the method described above.

The video-based or an image-based system in the example may be a surveillance system, customer monitoring system, safety engineering system, driver assistance system, multifunctional comfort system, safety-critical assistance system with intervention in a vehicle control, system for melding of driver information or driver assistance, robotic system, household or garden work robot system, networked or cooperative robotic system.

**Claims**

1. A computer implemented method of operating a learning system for training a predictor based on randomly selected representations of images, and afterwards training the predictor based on representations of images selected based on a reward (R) **characterized by** selecting (202) a representation ($x_n$) being raw image pixel data representing of an image from a plurality of the representations of images,

   determining (204) by an oracle a first representation (y) of at least one first label representing a class for the image,
   determining (206) by the predictor a second representation ($y_n$) of at least one second label representing a class for the image in a prediction,
   determining (208) by the predictor an uncertainty of the prediction of the second representation ($y_n$) based on the representation ($x_n$) of the image, the first representation (y) and the second representation ($y_n$),
   determining (210) the reward (R) depending on the representation ($x_n$) of the image and/or the second representation ($y_n$), and
   selecting (212) another representation of another image depending on the uncertainty and on the reward (R),
   **characterized in that** for training of the predictor a subset of input points is selected from the plurality of representations of images depending on an acquisition function,
   wherein the acquisition function is determined depending on the reward (R) and a probabilistic state (S),
   wherein the probabilistic state (S) is determined depending on at least the uncertainty,
   wherein the acquisition function is learned by a probabilistic policy predictor, in particular a deep Bayesian Neural Net, depending on the probabilistic state (S) and based on the reward (R).

2. The method of claim 1, **characterized in that** the reward (R) is determined depending on a model of the predictor and a comparison of a first measure of model fit and a second measure of model fit, wherein the first measure is determined depending on at least one first parameter of the model determined before training the model with the representation ($x_n$) and depending on at least one second parameter of the model determined after training the model with the representation ($x_n$).

3. The method of claim 1 or 2, **characterized by** training a probabilistic predictor for predicting the second representation ($y_n$), in particular a Gaussian process or a deep Bayesian Neural Net, based on randomly selected representations of images, and afterwards training the predictor for predicting the second representation ($y_n$) based on representations of images selected depending on the reward (R).

4. The method of any of claims 1 to 3, **characterized in that** input points are ranked depending on the acquisition function in a ranked order and the subset of input points is selected from the top of the ranked order in particular by selecting every k'th input point, where k is a natural number larger than 1.

5. The method of any of claims 1 to 4, **characterized in that**, the plurality of representations of images is recursively processed, wherein a set of samples is selected from the plurality of representations of images, labeled, and added to a plurality of input points comprising labeled images, wherein the plurality of input points comprising labeled images is processed for training of the predictor and wherein the set of samples is removed from the plurality of representations of images.

6. A system comprising means for carrying out the steps of the method of claims 1 to 5.

7. A computer program comprising instructions which, when the program is executed by a computer, cause the computer to carry out the method of claims 1 to 5.

8. A computer-readable medium comprising instructions which, when executed by a computer, cause the computer to carry out the method of claims 1 to 5.

**Patentansprüche**

1. Computerimplementiertes Verfahren zum Betreiben eines Lernsystems zum Trainieren eines Prädiktors auf der Grundlage zufällig ausgewählter Darstellungen von Bildern und anschließendem Trainieren des Prädiktors auf der Grundlage von Darstellungen von Bildern, die auf der Basis einer Belohnung (R) ausgewählt werden, **gekennzeichnet durch** Auswählen (202) einer Darstellung ($x_n$), bei der es sich um rohe Bildpixeldaten handelt, die ein Bild aus einer Vielzahl der Darstellungen von Bildern repräsentieren,

   Bestimmen (204), durch ein Orakel, einer ersten Darstellung (y) von mindestens einem ersten Etikett, das eine Klasse für das Bild repräsentiert,
   Bestimmen (206), durch den Prädiktor, einer zweiten Repräsentation ($y_n$) von mindestens einem zweiten Label, das eine Klasse für das Bild in einer Vorhersage repräsentiert,
   Bestimmen (208), durch den Prädiktor, einer Unsicherheit der Vorhersage der zweiten Darstellung ($y_n$) basierend auf der Darstellung ($x_n$) des Bildes, der ersten Darstellung (y) und der zweiten Darstellung ($y_n$),
   Bestimmen (210) der Belohnung (R) in Abhängigkeit von der Darstellung ($x_n$) des Bildes und/oder der zweiten Darstellung ($y_n$) und
   Auswählen (212) einer anderen Darstellung eines anderen Bildes in Abhängigkeit von der Unsicherheit und der Belohnung (R),
   **dadurch gekennzeichnet, dass** für das Training des Prädiktors eine Teilmenge von Eingangspunkten aus der Vielzahl von Bilddarstellungen in Abhängigkeit von einer Erfassungsfunktion ausgewählt wird,
   wobei die Erfassungsfunktion in Abhängigkeit von der Belohnung (R) und einem probabilistischen Zustand (S) bestimmt wird,
   wobei der probabilistische Zustand (S) in Abhängigkeit von mindestens der Unsicherheit bestimmt wird,
   wobei die Erfassungsfunktion durch einen probabilistischen Strategieprädiktor, insbesondere ein tiefes Bayes'-sches neuronales Netz, in Abhängigkeit von dem probabilistischen Zustand (S) und auf der Grundlage der Belohnung (R) gelernt wird.

2. Verfahren nach Anspruch 1, **dadurch gekennzeichnet, dass** die Belohnung (R) in Abhängigkeit von einem Modell des Prädiktors und einem Vergleich eines ersten Maßes der Modellanpassung und eines zweiten Maßes der Modellanpassung bestimmt wird, wobei das erste Maß in Abhängigkeit von mindestens einem ersten Parameter des Modells, der vor dem Training des Modells mit der Darstellung ($x_n$) bestimmt wird, und in Abhängigkeit von mindestens einem zweiten Parameter des Modells, der nach dem Training des Modells mit der Darstellung ($x_n$) bestimmt wird, bestimmt wird.

3. Verfahren nach Anspruch 1 oder 2, **dadurch gekennzeichnet, dass** ein probabilistischer Prädiktor zur Vorhersage der zweiten Darstellung ($y_n$), insbesondere ein Gauß-Prozess oder ein tiefes Bayes'sches Neuronales Netz, auf der Grundlage zufällig ausgewählter Bilddarstellungen trainiert wird und anschließend der Prädiktor zur Vorhersage der zweiten Darstellung ($y_n$) auf der Grundlage von in Abhängigkeit von der Belohnung (R) ausgewählten Bilddarstellungen trainiert wird.

4. Verfahren nach einem der Ansprüche 1 bis 3, **dadurch gekennzeichnet, dass** die Eingangspunkte in Abhängigkeit von der Erfassungsfunktion in eine Rangfolge gebracht werden und die Teilmenge der Eingangspunkte aus der Spitze der Rangfolge ausgewählt wird, insbesondere durch Auswählen jedes k'ten Eingangspunktes, wobei k eine natürliche Zahl größer als 1 ist.

5. Verfahren nach einem der Ansprüche 1 bis 4, **dadurch gekennzeichnet, dass** die Vielzahl von Bilddarstellungen rekursiv verarbeitet wird, wobei ein Satz von Abtastwerten aus der Vielzahl von Bilddarstellungen ausgewählt, gekennzeichnet und zu einer Vielzahl von Eingangspunkten hinzugefügt wird, die gekennzeichnete Bilder umfassen, wobei die Vielzahl von Eingangspunkten, die gekennzeichnete Bilder umfassen, zum Training des Prädiktors verarbeitet wird und wobei der Satz von Abtastwerten aus der Vielzahl von Bilddarstellungen entfernt wird.

6. System, das Mittel zur Durchführung der Schritte des Verfahrens nach Ansprüchen 1 bis 5 umfasst.

7. Computerprogramm, das Anweisungen enthält, die, wenn das Programm von einem Computer ausgeführt wird, den Computer veranlassen, das Verfahren nach Ansprüchen 1 bis 5 auszuführen.

8. Computerlesbares Medium, das Anweisungen enthält, die, wenn sie von einem Computer ausgeführt werden, den Computer veranlassen, das Verfahren nach Ansprüchen 1 bis 5 auszuführen.

## Revendications

1. Procédé mis en oeuvre par ordinateur pour faire fonctionner un système d'apprentissage pour entraîner un prédicteur sur la base de représentations d'images sélectionnées au hasard puis pour entraîner le prédicteur sur la base de représentations d'images sélectionnées sur la base d'une récompense (R), **caractérisé par le fait que** la sélection (202) d'une représentation ($x_n$) consiste en des données de pixels d'image brute représentant d'une image à partir d'une pluralité des représentations d'images,

   déterminer (204), par un oracle, une première représentation (y) d'au moins une première étiquette représentant une classe pour l'image,
   déterminer (206), par le prédicteur, une deuxième représentation ($y_n$) d'au moins une deuxième étiquette représentant une classe pour l'image dans une prédiction,
   déterminer (208), par le prédicteur, une incertitude de la prédiction de la deuxième représentation ($y_n$) sur la base de la représentation ($x_n$) de l'image, de la première représentation (y) et de la deuxième représentation ($y_n$),
   déterminer (210) la récompense (R) en fonction de la représentation ($x_n$) de l'image et/ou de la deuxième représentation ($y_n$), et
   sélectionner (212) une autre représentation d'une autre image en fonction de l'incertitude et de la récompense (R),
   **caractérisé par le fait que**, pour l'entraînement du prédicteur, un sous-ensemble de points d'entrée est sélectionné parmi la pluralité de représentations d'images en fonction d'une fonction d'acquisition,
   la fonction d'acquisition étant déterminée en fonction de la récompense (R) et d'un état probabiliste (S),
   l'état probabiliste (S) étant déterminé en fonction d'au moins l'incertitude,
   la fonction d'acquisition étant apprise par un prédicteur de politique probabiliste, en particulier un réseau neuronal bayésien profond, en fonction de l'état probabiliste (S) et sur la base de la récompense (R).

2. Procédé selon la revendication 1, **caractérisé en ce que** la récompense (R) est déterminée en fonction d'un modèle du prédicteur et d'une comparaison entre une première mesure d'ajustement de modèle et une deuxième mesure d'ajustement de modèle, la première mesure étant déterminée en fonction d'au moins un premier paramètre du modèle déterminé avant l'entraînement du modèle avec la représentation ($x_n$) et en fonction d'au moins un deuxième paramètre du modèle déterminé après l'entraînement du modèle avec la représentation ($x_n$).

3. Procédé selon la revendication 1 ou la revendication 2, **caractérisé par** l'entraînement d'un prédicteur probabiliste pour prédire la deuxième représentation ($y_n$), en particulier un processus gaussien ou un réseau neuronal bayésien profond, sur la base de représentations d'images sélectionnées aléatoirement, puis, après l'entraînement du prédicteur pour prédire la deuxième représentation ($y_n$), sur la base de représentations d'images sélectionnées en fonction de la récompense (R).

4. Procédé selon l'une quelconque des revendications 1 à 3, **caractérisé en ce que** les points d'entrée sont classés selon la fonction d'acquisition dans un ordre de classement, et le sous-ensemble de points d'entrée est sélectionné à partir du haut de l'ordre de classement, en particulier en sélectionnant chaque $k^{ème}$ point d'entrée, où k est un entier naturel plus grand que 1.

5. Procédé selon l'une quelconque des revendications 1 à 4, **caractérisé en ce que** la pluralité de représentations d'images est traitée de manière récursive, où un ensemble d'échantillons est sélectionné dans la pluralité de représentations d'images, étiqueté, et ajouté à une pluralité de points d'entrée comprenant des images étiquetées, où la pluralité de points d'entrée comprenant des images étiquetées est traitée pour l'entraînement du prédicteur et où l'ensemble d'échantillons est supprimé de la pluralité de représentations d'images.

6. Système comprenant des moyens pour mettre en oeuvre les étapes du procédé selon les revendications 1 à 5.

7. Programme d'ordinateur comprenant des instructions qui, lorsque le programme est exécuté par un ordinateur, amènent l'ordinateur à mettre en oeuvre le procédé selon les revendications 1 à 5.

8. Support lisible par ordinateur comprenant des instructions qui, lorsque le programme est exécuté par un ordinateur, amènent l'ordinateur à mettre en oeuvre le procédé selon les revendications 1 à 5.

**Fig. 1**

**Fig. 2**

300

302　　　　　　　　　304

310　100　312　　　　　306　　　　　　　　308

**Fig. 3**

# EP 3 736 739 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. EBERT** ; **M. FRITZ** ; **B. SCHIELE**. RALF: A Reinforced Active Learning Formulation for Object Class Recognistion. *CVPR, 2012 IEEE Conference on Computer Vision and Pattern Recognition*, 3626-3633

- Deep Active Learning for Efficient Training of a LiDAR 3D Object Detector. **DI FENG et al.** ARXIV.ORG. CORNELL UNIVERSITY LIBRARY, 30 January 2019
- **R. J. WILLIAMS**. Simple statistical gradient-following algorithms for connectionist reinforcement learning. *Machine learning*, 1992, vol. 8 (3-4), 229-256